# EUROPÄISCHE PATENTSCHRIFT

(11) **EP 2 876 313 B1**
(45) Veröffentlichungstag und Bekanntmachung des Hinweises auf die Patenterteilung: **11.10.2017**
(21) Anmeldenummer: 14194315.9
(22) Anmeldetag: 21.11.2014
(51) Int. Cl.: F16B 13/08, B66B 11/02, F16B 47/00

(54) **Vorrichtung zur Anordnung eines Gegenstücks hinter einer dünnwandigen Platte**
Device for arranging a counterpart behind a thin-walled panel
Dispositif d'agencement d'un pendant derrière une plaque à paroi mince

(30) Priorität: 21.11.2013 DE 202013105300 U
(43) Veröffentlichungstag der Anmeldung: 27.05.2015
(73) Patentinhaber: Lindemann, Tim, 63500 Seligenstadt (DE)
(72) Erfinder: Lindemann, Tim, 63500 Seligenstadt (DE)
(74) Vertreter: Katscher Habermann Patentanwälte

(56) Entgegenhaltungen:
- AU-A- 1 381 183
- DE-A1- 3 008 796
- DE-A1- 4 332 046
- DE-A1- 19 514 260
- DE-A1-102006 032 901
- DE-C1- 4 102 491
- US-A- 1 506 123
- US-A- 5 044 854
- US-A- 5 110 243

## Beschreibung

Die Erfindung betrifft eine Vorrichtung zur Anordnung eines Gegenstücks hinter einer dünnwandigen Platte, wobei die Vorrichtung zur Anordnung eines Gegenstücks hinter einer dünnwandigen Platte das Gegenstück und ein Anzugselement umfasst, wobei das Gegenstück starr, stabförmig und einstückig ausgestaltet ist und einen abschnittsweise unterschiedlich ausgerichteten Verlauf aufweist und wobei das Gegenstück eine zu Enden des Gegenstücks beabstandet angeordnete Aufnahmeeinrichtung zur Festlegung eines Befestigungselements aufweist, so dass das Gegenstück durch eine Öffnung der Platte von einer Vorderseite auf eine Rückseite der Platte geführt werden kann, mit dem Anzugselement durch die Öffnung an die Rückseite der Platte zeitweilig angezogen und festgelegt werden kann, und anschließend das Befestigungselement mit dem Gegenstück verbunden und das Gegenstück mit dem Befestigungselement dauerhaft an die Rückseite der Platte angedrückt und festgelegt werden kann, um das Befestigungselement zusammen mit dem Gegenstück an der Platte klemmend festzulegen.

Eine Festlegung eines Befestigungselementes an einer dünnwandigen Platte mit Hilfe eines Gegenstücks ist bereits bekannt. Dabei wird das Gegenstück auf einer Rückseite der Platte hinter einer Öffnung angeordnet und anschließend mit dem Befestigungselement an der Vorderseite der dünnwandigen Platte durch die Öffnung verbunden, so dass das Befestigungselement mit dem Gegenstück klemmend an der Platte festgelegt werden. Um eine flächig möglichst gut verteilte Krafteinleitung in die Platte und somit eine feste Verbindung des Befestigungselementes mit der Platte zu erreichen, wird das Gegenstück flächig, beispielsweise in Form einer rechteckigen oder runden Platte ausgestaltet.

Eine derartige Festlegung des Befestigungselementes an der dünnwandigen Platte erlaubt eine sichere und dauerhafte Verbindung des Befestigungselementes mit der Platte. Durch ein großflächig an der Rückseite der Platte anliegendes Gegenstück kann erreicht werden, dass die über das Befestigungselement einwirkenden Kräfte und Momente auf einen großen Bereich der dünnwandigen Platte verteilt werden, um lokale Verformungen oder Beschädigungen im Bereich der Festlegung des Befestigungselements zu verhindern.

Die Montage des Gegenstücks an der Rückseite der dünnwandigen Platte kann jedoch insbesondere in engeren oder schwer zugänglichen Räumen hinter der dünnwandigen Platte sehr anspruchsvoll sein. So ist beispielsweise eine Montage des Gegenstücks an einer Rückwand einer Aufzugskabine regelmäßig dadurch erschwert oder nahezu unmöglich, dass zwischen der Aufzugskabine und einer die Aufzugskabine umgebenden Aufzugsschachtwand nur ein schmaler Spalt für die Montage zugänglich ist.

Des Weiteren beeinflusst die Ausrichtung des Gegenstücks auf der Rückseite der dünnwandigen Platte erheblich die Genauigkeit der Ausrichtung des Befestigungselements an der Vorderseite. Da jedoch die Ausrichtung des Gegenstücks hinter der Platte vorgenommen wird, ist eine genaue Ausrichtung und Festlegung des Gegenstücks erschwert.

Vorrichtungen der eingangs genannten Gattung sind beispielsweise aus US 5 110 243 A, US 5 044 854 A, DE 195 14 260 A1 oder DE 30 08 796 A1 bekannt. Dabei wird ein einteiliges oder ein mehrteiliges Gegenstück regelmäßig mit einem Faden oder Draht verbunden und durch die Öffnung auf die Rückseite der dünnwandigen Platte geführt. Um das Gegenstück zu sichern muss der Faden oder Draht von einem Benutzer gehalten werden. Eine zuverlässige Positionierung oder Ausrichung des Gegenstücks ist kaum möglich.

In US 1 506 123 wird eine Vorrichtung beschrieben, bei der das Gegenstück zunächst ebenfalls mit einem Faden gesichert wird, der Faden jedoch mit einer Klemmvorrichtung aus Draht fixiert werden kann, um ein Zurückhalten des Gegenstücks während der Montage zu erleichtern.

Es wird als eine Aufgabe der vorliegenden Erfindung angesehen, eine Vorrichtung zur Anordnung eines Gegenstücks hinter einer dünnwandigen Platte so auszugestalten, dass das Gegenstück auf der Rückseite der dünnwandigen Platte auch bei engeren oder schwer zugänglichen Räumen hinter der dünnwandigen Platte zuverlässig gehalten und eine Positionierung und Ausrichtung des Gegenstücks für eine nachfolgende Montage des Befestigungselementes erleichtert werden kann.

Diese Aufgabe wird erfindungsgemäß dadurch gelöst, dass die Vorrichtung ein an dem Gegenstück festlegbares Montagehilfsteil aufweist, das an die Vorderseite der Platte angelegt und mit dem Gegenstück verbunden werden kann, um das Gegenstück an der Platte während der Montage klemmend festzulegen. Dabei kann das Montagehilfsteil beispielsweise vorher oder nachträglich an dem Anzugselement angeordnet werden und nach einer Ausrichtung des Gegenstücks an der Rückseite der Platte an die Vorderseite der Platte angezogen und an dem Gegenstück festgelegt werden. Durch die Festlegung des Montagehilfsteils an dem Gegenstück wird das Gegenstück für die Dauer der Montage des Befestigungselements klemmend an der Platte festgelegt, so dass keine erneute Ausrichtung des Gegenstücks bei einer Festlegung des Befestigungselements notwendig wird und der Montageaufwand reduziert wird. Weiterhin kann durch das Montagehilfsteil verhindert werden, dass sich das Gegenstück während der Montage von der Rückseite löst und beispielsweise herabfällt.

Somit kann das Gegenstück durch eine Öffnung der Platte von einer Vorderseite auf eine Rückseite der Platte geführt, mit dem Anzugselement durch die Öffnung an die Rückseite der Platte zeitweilig angezogen und festgelegt werden. Anschließend kann das Befestigungselement mit dem Gegenstück verbunden und das Gegenstück mit dem Befestigungselement dauerhaft an die Rückseite der Platte angedrückt und festgelegt werden, um das Befestigungselement zusammen mit dem Gegenstück an der Platte klemmend festzulegen.

Durch den abschnittsweise unterschiedlich ausgerichteten Verlauf des jeweils abschnittsweise stabförmigen Gegenstücks wird gewährleistet, dass das Gegenstück an der Rückseite der Platte einen vergleichsweise großen Bereich erfasst und nicht nur eine im Wesentlichen punktförmige oder linienförmige bzw. gradlinige Abstützung des Gegenstücks an der Rückseite der Platte erfolgt. Durch die großflächige Abstützung des Gegenstücks an der Rückseite der Platte können über das Befestigungselement in das Gegenstück eingeleitete Kräfte und Momente auf einen großen Bereich der Platte verteilt werden, um lokale Belastungsspitzen im Bereich einer Kontaktfläche des Befestigungselements mit der Platte zu vermeiden. Durch die stabförmige Ausgestaltung des Gegenstücks kann erreicht werden, dass das Gegenstück durch eine vergleichsweise kleine Öffnung von der Vorderseite der Platte aus an die Rückseite der Platte geführt und dort positioniert und montiert werden kann. Der Durchmesser der Öffnung in der Platte muss nur geringfügig größer sein als der größte Durchmesser des Gegenstücks entlang seines abschnittsweise unterschiedlich ausgerichteten Verlaufs.

Die Länge des Gegenstücks kann beispielsweise zwischen 10 cm und 30 cm, bevorzugt zwischen 15 cm und 25 cm, und die Breite bzw. der Durchmesser zwischen 0,5 und 1,5 cm liegen, so dass das Gegenstück beispielsweise durch eine Öffnung mit einem Öffnungsdurchmesser von etwa 2 cm in der dünnwandigen Platte geführt werden kann. Die Aufnahmeeinrichtung kann beabstandet zu den Enden des Gegenstücks beispielsweise mittig angeordnet werden und das Gegenstück durch den an der Aufnahmeeinrichtung festgelegten Anzugselement an der Rückseite der Platte angeordnet und ausgerichtet werden.

Durch die erfindungsgemäße Ausgestaltung der Vorrichtung mit dem abschnittsweise unterschiedlich ausgerichteten stabförmigen Gegenstück und dem Anzugselement und dem Montagehilfsteil wird gewährleistet, dass eine Montage des Gegenstücks auf der Rückseite der dünnwandigen Platte auch bei engeren oder schwer zugänglichen Räumen hinter der dünnwandigen Platte auf eine einfache Weise möglich wird sowie eine Ausrichtung des Gegenstück für eine nachfolgende Montage des Befestigungselementes erleichtert wird.

Mit der erfindungsgemäßen Vorrichtung ist es beispielsweise möglich, einen Handlauf in einer Aufzugskabine neu zu montieren, wobei die Montage nur von einer Person und ausschließlich von der Innenseite der Aufzugskabine aus durchgeführt werden kann, da das Gegenstück durch eine Öffnung in der Kabinenwand an deren Rückseite positioniert und das Befestigungselement mit dem Handlauf von der Innenseite aus mit dem an der Rückseite positionierten Gegenstück verbunden und an der Kabinenwand festgelegt werden kann.
Es ist bevorzugt vorgesehen, dass ein das Gegenstück einhüllendes Rechteck ein Seitenverhältnis 1:2, bevorzugt 1:1,5 aufweist. Beispielsweise kann das das Gegenstück einhüllende Rechteck die Abmessungen 5 cm x 10 cm oder bevorzugt 5 cm x 7,5 cm aufweisen. Das derart ausgestaltete Gegenstück weist eine ausreichend große Anlagefläche für eine verteilte Krafteinleitung in die Platte und eine sichere Festlegung des Befestigungselementes an dem Gegenstück auf, so dass das Gegenstück auf eine einfache Weise transportiert und gelagert werden. Gleichzeitig kann mit einem derartigen Gegenstück verhindert werden, dass bei einer Festlegung des Befestigungselements mit diesem Gegenstück an der Platte und während einer erwartungsgemäßen Belastung des Befestigungselements keine unerwünschte Verformung der Platte auftreten kann.

Gemäß einer Ausgestaltung des Erfindungsgedankens ist vorteilhafterweise vorgesehen, dass das Gegenstück eine Auflagefläche aufweist, die flächig an die Rückseite der dünnwandigen Platte anlegbar ist. Die flächig an der Rückseite anliegende Auflagefläche gewährleistet, dass das Gegenstück die Kraft über einen großen Bereich verteilt in die dünnwandige Platte einleitet und die Platte nicht verformt wird.

Erfindungsgemäß ist vorgesehen, dass die Auflagefläche ein Haftelement aufweist, so dass das Gegenstück an der Platte haftend festlegbar ist. Die Festlegung des Gegenstücks an der Rückseite der Platte gewährleistet, dass das ausgerichtete Gegenstück an der Platte für die Dauer der Montage des Befestigungselements festgelegt bleibt und keine erneute Ausrichtung des Gegenstücks bei einer Festlegung des Befestigungselements notwendig wird. Dadurch wird der Montageaufwand reduziert und die Genauigkeit der Ausrichtung des Gegenstücks erhöht. Auf diese Weise kann insbesondere die Montage in engen schmalen Räumen wie beispielsweise in Aufzugskabinen mit einem schmalen Raum zwischen der Aufzugskabine und einer die Aufzugskabine umgebenden Aufzugsschachtwand auf eine einfache Weise erfolgen.

Das Haftelement kann beispielsweise einen Klebestreifen oder einen Saugnapf aufweisen, um eine vorübergehende Festlegung des Gegenstücks an der Rückseite der dünnwandigen Platte zu ermöglichen. Das Gegenstück kann mehrere beispielsweise über die Auflagefläche verteilte Haftelemente aufweisen. Die Haftelemente können gleichmäßig über die gesamte Auflagefläche oder aber in der Nähe der Enden des Gegenstücks angeordnet sein.

Es ist bevorzugt vorgesehen, dass die Auflagefläche eine Ausnehmung aufweist und dass das Haftelement in der Ausnehmung festgelegt ist, so dass die Auflagefläche flächig an die Rückseite der dünnwandigen Platte anlegbar ist. Die Abmessungen und die Tiefe der Ausnehmung kann erfindungsgemäß derart angepasst sein, dass bei einem Anlegen der Vorrichtung an die dünnwandige Platte die Haftelemente einen fest haftenden Kontakt mit der Rückseite der Platte eingehen und gewährleisten können, jedoch ein flächiges Anlegen der Auflagefläche an die Rückseite nicht verhindern. So kann beispielsweise der Saugnapf um wenige Millimeter aus der Ausnehmung in die Auflagefläche hereinragen, so dass nach einem Anpressen des Gegenstücks an die Rückseite der Platte einen Haftkontakt des Saugnapfs mit der Rückseite der Platte gewährleistet wird und dass anschließend nach einer elastischen und für den Haftkontakt erforderlichen Verformung des Saugnapfs auch die Auflagefläche an die Rückseite der Platte angelegt werden kann.

Um das Gegenstück während der Montage an der Platte festlegen und zumindest zeitweise fixieren zu können ist erfindungsgemäß vorgesehen, dass die Vorrichtung ein an dem Gegenstück festlegbares Montagehilfsteil aufweist, das an die Vorderseite der Platte angelegt und mit dem Gegenstück verbunden werden kann. Das Montagehilfsteil kann beispielsweise in Form einer Scheibe oder eines Streifens ausgestaltet sein. Zweckmäßigerweise ist der Durchmesser bzw. die Länge des Montagehilfsteils größer als die Öffnung der Platte, so dass das Montagehilfsteil an gegenüberliegenden Seiten über die Öffnung der Platte hinausragen und eine zuverlässig klemmende Festlegung des Gegenstücks an der Platte ermöglichen kann.

Um trotz, bzw. zusätzlich zu dem Montagehilfsteil eine Montage des Befestigungselements an dem Gegenstück zu ermöglichen ist erfindungsgemäß vorgesehen, dass das Montagehilfsteil eine Montageöffnung aufweist. Durch die Montageöffnung bleibt erfindungsgemäß die Aufnahmeeinrichtung nach der klemmenden Festlegung des Gegenstücks an der Platte durch das Montagehilfsteil von der Vorderseite der Platte zugänglich, so dass die Montage des Befestigungselements an dem Gegenstück durch die Montageöffnung des Montagehilfsteils vorgenommen werden kann.

Vorteilhafterweise ist erfindungsgemäß vorgesehen, dass die Aufnahmeeinrichtung eine Bohrung aufweist. Der Durchmesser der Bohrung ist zweckmäßigerweise kleiner als die Breite bzw. der Durchmesser des abschnittsweise stabförmigen Gegenstücks und kann zu einer Festlegung des Anzugselementes und des Befestigungselementes beispielsweise durch eine klemmende Verbindung eingesetzt werden.

Die Vorrichtung ist vorteilhafterweise so ausgestaltet, dass die Bohrung einen Durchmesser zwischen 0,3 cm und 1,5 cm, bevorzugt zwischen 0,5 cm und 1 cm aufweist.

Erfindungsgemäß ist vorgesehen, dass die Bohrung einen kleineren Durchmesser als die Öffnung aufweist, so dass die seitlichen Abstandsdifferenzen bei einer Festlegung des Gegenstücks an der Öffnung ausgeglichen werden können. Des Weiteren wird dadurch die Ausrichtung des Gegenstücks an der Rückseite der dünnwandigen Platte erleichtert und mögliche Abstandsdifferenzen können auf eine vorteilhafte Weise ausgeglichen werden.

Gemäß einer Ausgestaltung der erfindungsgemäßen Vorrichtung ist vorteilhafterweise vorgesehen, dass die Bohrung ein Gewinde aufweist. Das Gewinde gewährleistet, dass das Befestigungselement an dem Gegenstück auf eine einfache Weise festgelegt und nach Bedarf von dem Gegenstück wieder gelöst werden kann.

Erfindungsgemäß ist vorgesehen, dass das Anzugselement ein Gewindeelement aufweist, das mit dem Gewinde der Bohrung in Eingriff bringbar ist. Somit kann das Anzugselement für eine Anordnung und eine Ausrichtung des Gegenstücks an der Rückseite der dünnwandigen Platte an dem Gegenstück festgelegt werden und nach einer Festlegung des Gegenstücks beispielsweise durch die Haftelemente von dem Gegenstück wieder gelöst werden. Anschließend kann an dem Gegenstück das Befestigungselement angeordnet und festgelegt werden. So kann beispielsweise bei einer Montage eines Handlaufs in einer Aufzugskabine zuerst das Gegenstück in dem Raum zwischen der Aufzugskabine und einer die Aufzugskabine umgebenden Aufzugsschachtwand angeordnet und anschließend ein Handlauf an dem Gegenstück festgelegt werden.

Vorteilhafterweise ist erfindungsgemäß vorgesehen, dass das Anzugselement ein flexibles Führungselement aufweist, um eine Führung des Gegenstücks durch die Öffnung an der dünnwandigen Platte zu erleichtern. Das Führungselement kann an dem Gewindeelement des Anzugselementes festgelegt sein und beispielsweise in Form einer dünnen Kette, eines Fadens, eines biegsamen Kunststoff- oder Metalldrahtes ausgestaltet sein. Weiterhin ist erfindungsgemäß vorgesehen, dass das Führungselement in Form eines mehrere schwenkbar miteinander verbundene Einzelstäbe aufweisenden Stabes ausgestaltet ist, der eine Verformung des Führungselementes und somit eine Führung des Anzugselementes durch die Öffnung in der dünnwandigen Platte erlaubt.

Erfindungsgemäß ist vorgesehen, dass die Vorrichtung eine Sicherungsvorrichtung mit einem Sicherungselement und mit einem Verbindungselement aufweist, wobei das mit Hilfe des Verbindungselements an dem Gegenstück festgelegt ist. Das Sicherungselement kann stabförmig ausgestaltet sein und weist zweckmäßigerweise eine größere Länge auf als der Durchmesser der Öffnung an der dünnwandigen Platte beträgt. Auf diese Weise wird sichergestellt, dass das Sicherungselement nicht unbeabsichtigt durch die Öffnung hindurch rutschen oder fallen kann. Das Verbindungselement kann in Form eines Fadens ausgestaltet sein, der beispielsweise neben der Bohrung an dem Gegenstück befestigt ist. Erfindungsgemäß ist auch vorgesehen, dass das Sicherungselement an dem Führungselement befestigbar ist, um die Führung des Gegenstücks durch die Öffnung und um gleichzeitig eine Sicherung des Gegenstücks zu gewährleisten. Die Sicherungseinrichtung kann auf diese Weise verhindern, dass das Gegenstück während oder nach dem Einführen durch die Öffnung hindurch versehentlich fallen gelassen wird oder sich löst, und an der unzugänglichen Rückseite der Platte herabfällt.

Gemäß einer Ausgestaltung der erfindungsgemäßen Vorrichtung ist vorteilhafterweise vorgesehen, dass das Gegenstück einen Z-, S-, W-, C-, G-, L-, M- oder spiralförmigen Verlauf aufweist, so dass das Gegenstück durch die Öffnung von der Vorderseite auf die Rückseite der Platte geführt werden kann. Eine derartige Ausgestaltung des Gegenstücks erlaubt eine großflächige Bedeckung der Rückwand der Platte und somit eine bessere Kraftverteilung in der Platte, wodurch eine unerwünschte Verformung der Platte verhindert wird.

Die Form des Gegenstücks ist zweckmäßigerweise für eine Führung des Gegenstücks durch die Öffnung angepasst, da die unter einem geraden oder unter einem stumpfen Winkel miteinander verbundene Abschnitte des Gegenstücks eine Führung des Gegenstücks durch die Öffnung verhindern können. Das spiralförmig ausgestaltete Gegenstück kann beispielsweise in insbesondere engen Räumen hinter der dünnwandigen Platte vorteilhaft verwendet werden, da das spiralförmige Gegenstück auf einfache Weise vergleichsweise flach von der Vorderseite aus ohne einen großen Platzbedarf hinter der dünnwandigen Platte durch die Öffnung durchgeführt und an der Rückseite der Platte angeordnet werden kann.

Die gesamte Länge des Gegenstücks liegt zweckmäßigerweise zwischen 20 cm und 25 cm und die Breite zwischen 0,5 cm und 1,5 cm. Bei besonders engen Räumen hinter der dünnwandigen Platte kann die Dicke des Gegenstücks beispielsweise zwischen 0,5 cm und 1 cm oder noch weniger betragen, um eine Führung des Gegenstücks durch die Öffnung zusätzlich zu erleichtern.

Weitere vorteilhafte Ausgestaltungen der erfindungsgemäßen Vorrichtung werden anhand von in der Zeichnung dargestellten Ausführungsformen näher erläutert. Es zeigt:
- Fig. 1: eine Ansicht eines Gegenstücks mit einem Anzugselement,
- Fig. 2: eine Ansicht eines an einer dünnwandigen Platte ausgerichteten Gegenstücks mit einem Anzugselement,
- Fig. 3: eine Ansicht eines an einer dünnwandigen Platte hinter einer Öffnung haftend angeordneten Gegenstücks,
- Fig. 4: eine Ansicht eines mit dem Gegenstück an der dünnwandigen Platte festgelegten Befestigungselements,
- Fig. 5: eine Ansicht eines durch eine Öffnung der dünnwandigen Platte durchgeführten Gegenstücks mit einem Anzugselement,
- Fig. 6: eine Ansicht eines hinter einer Öffnung angeordneten Gegenstücks mit einem Anzugselement,
- Fig. 7: eine Ansicht eines hinter einer Öffnung angeordneten und ausgerichteten Gegenstücks mit einem Anzugselement,
- Fig. 8: eine Draufsicht eines Gegenstücks mit einem alternativ ausgestalteten Anzugselement,
- Fig. 9: eine Schnittansicht eines Gegenstücks mit einem Haftelement in Form eines Saugnapfs,
- Fig. 10: eine Draufsicht eines abschnittsweise durch eine Öffnung durchgeführten Gegenstücks,
- Fig. 11: eine Draufsicht eines bis zur Hälfte durch eine Öffnung durchgeführten Gegenstücks,
- Fig. 12: eine Draufsicht eines komplett durch eine Öffnung durchgeführten Gegenstücks,
- Fig. 13: eine Draufsicht eines spiralförmig ausgestalteten Gegenstücks,
- Fig. 14: eine Ansicht einer erfindungsgemäßen Vorrichtung mit einem Montagehilfsteil,
- Fig. 15: eine Draufsicht eines erfindungsgemäßen Montagehilfsteils,
- Fig. 16: eine Schnittansicht des in Fig. 15 gezeigten Montagehilfsteils,
- Fig. 17: eine Draufsicht eines Gegenstücks mit einer Aufnahmeeinrichtung und mit Festlegöffnungen für ein Montagehilfsteil.

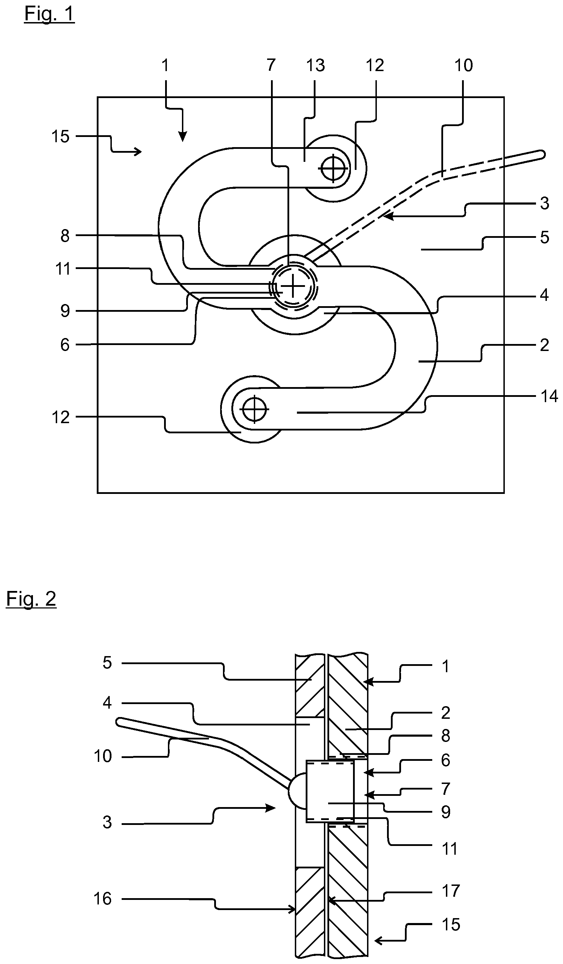

Fig. 1 zeigt eine Vorrichtung 1 mit einem Gegenstück 2 und mit einem Anzugselement 3. Das Gegenstück 2 ist S-förmig ausgestaltet, so dass das Gegenstück 3 durch eine Öffnung 4 einer dünnwandigen Platte 5 durchgeführt werden kann, wobei ein Durchmesser der Öffnung 4 nur geringfügig größer als ein Durchmesser des Gegenstücks 2 ist. Die gesamte Länge des Gegenstücks 2 liegt zweckmäßigerweise zwischen 15 cm und 25 cm und dessen Breite bzw. Durchmesser kann zwischen 0,5 cm und 1,5 cm variieren.

Das Gegenstück 2 weist eine Aufnahmeeinrichtung 6 auf, die in Form einer Bohrung 7 mit einem Gewinde 8 ausgestaltet ist. Der Durchmesser der Bohrung 7 ist erfindungsgemäß kleiner als die Breite des Gegenstücks 2 und liegt zweckmäßigerweise zwischen 0,3 cm und 1,5 cm, bevorzugt zwischen 0,5 cm und 1 cm. Das Anzugselement 3 ist zweiteilig ausgestaltet und weist in diesem Ausführungsbeispiel ein Gewindeelement 9 und ein Führungselement 10 auf, wobei das Führungselement 10 flexibel und bei diesem Ausführungsbeispiel in Form eines Fadens ausgestaltet ist. An dem Gewindeelement 9 des Anzugselements 3 ist ein Gewinde 11 angeordnet, das mit dem Gewinde 8 der Aufnahmeeinrichtung 6 in Eingriff bringbar und somit das Anzugselement 3 an dem Gegenstück 2 festlegbar ist. Für eine Festlegung des Gegenstücks 2 an der dünnwandigen Platte 5 für eine nachfolgende Montage des Befestigungselementes (nicht gezeigt) weist das Gegenstück 2 zwei Haftelemente 12 auf. Die Haftelemente 12 sind in diesem Ausführungsbeispiel in Form der Saugnäpfe ausgestaltet und sind an den gegenüberliegenden Enden 13 und 14 des Gegenstücks 2 angeordnet.

Fig. 2 zeigt die an der dünnwandigen Platte 5 ausgerichtete Vorrichtung 1. Das Gegenstück 2 der Vorrichtung ist an einer Rückseite 15 der dünnwandigen Platte 5 festgelegt und das Führungselement 10 des Anzugselementes 3 ist durch die Öffnung 4 auf eine Vorderseite 16 der dünnwandigen Platte 5 durchgeführt. Nach einer Ausrichtung des Gegenstücks 2 an der Rückseite 15 der dünnwandigen Platte 5 wird das Gegenstück 2 an die Rückseite 15 durch das Führungselement 10 angezogen, so dass die Haftelemente 12 in Eingriff mit der Rückseite 15 der dünnwandigen Platte 5 gebracht werden und eine Auflagefläche 17 des Gegenstücks 2 in einen großflächigen Kontakt mit der Rückseite 15 der dünnwandigen Platte 5 kommt.

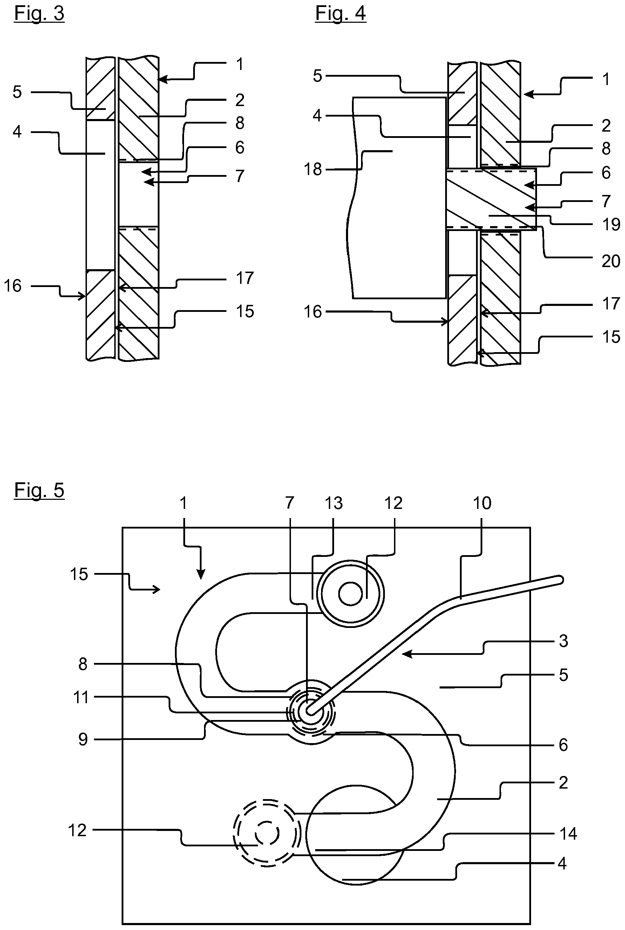

Fig. 3 zeigt die dünnwandige Platte 5 mit dem an ihr festgelegten Gegenstück 2. Das Gegenstück 2 ist an der Rückseite 15 der dünnwandigen Platte 5 haftend angeordnet und das Anzugselement 3 ist bereits von dem Gegenstück 2 gelöst. Durch die Haftelemente 12 bleibt das Gegenstück 2 an der Rückseite 15 der dünnwandigen Platte 5 haften und eine Verlagerung des Gegenstücks 2 vor einer nachfolgenden Montage des Befestigungselement (nicht gezeigt) wird verhindert. Die Aufnahmeeinrichtung 6 des Gegenstücks 2 weist einen kleineren Durchmesser als die Öffnung 4 der dünnwandigen Platte 5 auf und die Abstandsdifferenzen bei der Ausrichtung des Gegenstücks 2 an der Rückseite 15 der dünnwandigen Platte 5 können vorteilhaft auf eine einfache Weise ausgeglichen werden.

Fig. 4 zeigt ein an der dünnwandigen Platte 5 festgelegtes Befestigungselement 18. Das Befestigungselement 18 weist einen Gewindestift 19 auf, wobei das Gewinde 8 des Gegenstücks 2 mit dem ein Gewinde 20 aufweisenden Gewindestift 19 des Befestigungselements 18 in Eingriff steht. Auf diese Weise wird das Befestigungselement 18 an dem an der Rückseite 15 der dünnwandigen Platte 5 ausgerichteten und festgelegten Gegenstück 2 festgelegt und an der dünnwandigen Platte 5 klemmend angeordnet. Durch die an der Rückseite 15 angelegte Auflagefläche 17 des Gegenstücks 2 wird erreicht, dass die Kraft an der dünnwandigen Platte 5 gleichmäßig verteilt wird und dass eine unerwünschte Verformung der dünnwandigen Platte 5 verhindert wird.

Durch die Ausgestaltung des Gegenstücks 2 mit dem Anzugselement 3 wird gewährleistet, dass eine Montage des Gegenstücks 2 auf der Rückseite 15 der dünnwandigen Platte 5 auch bei engeren oder schwer zugänglichen Räumen hinter der dünnwandigen Platte 5, wie es beispielsweise in einer Aufzugkabine mit einem schmalen Raum zwischen der Aufzugskabine und einer die Aufzugskabine umgebenden Aufzugsschachtwand der Fall ist, auf eine einfache Weise möglich wird. Des Weiteren wird aufgrund der großen Auflagefläche 17 des Gegenstücks 2 eine gleichmäßige Krafteinleitung in die dünnwandige Platte 5 erreicht, eine Verformung der dünnwandigen Platte 5 verhindert und das Befestigungselement 18 sicher und dauerhaft an der dünnwandigen Platte 5 festgelegt.

Fig. 5 zeigt das Gegenstück 2 mit Anzugselement 3 an der Öffnung 4 der dünnwandigen Platte 5, wobei das Gegenstück 2 nur teilweise durch die Öffnung 4 durchgeführt ist. Auf Grund seiner S-förmigen Ausgestaltung kann das Gegenstück 2 auf eine einfache Weise durch die Öffnung 4 in der dünnwandigen Platte 5 durchgeführt werden und an der Rückseite 15 der dünnwandigen Platte 5 angeordnet werden. Das flexible Anzugselement 3 erlaubt eine einfache Anordnung, Ausrichtung und Festlegung des Gegenstücks 2 an der dünnwandigen Platte 5.

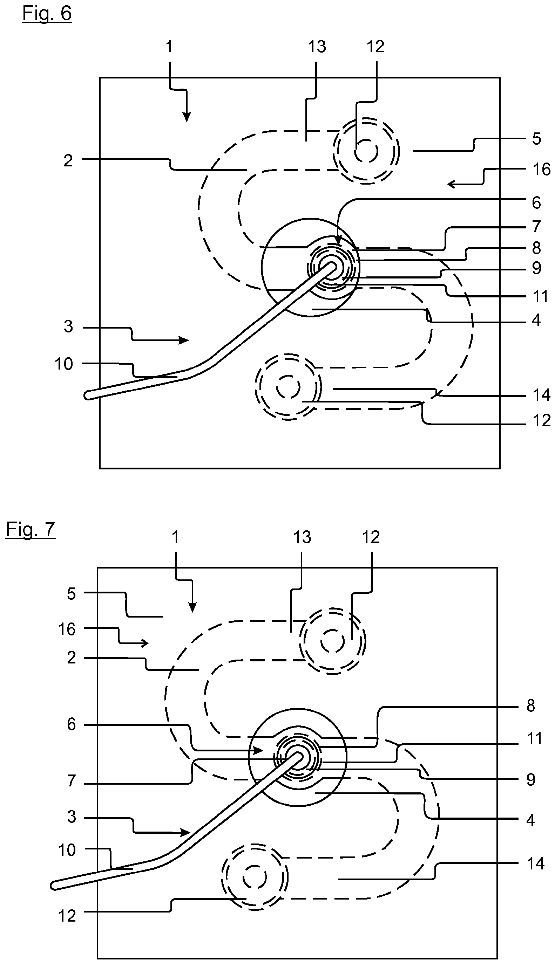

Fig. 6 zeigt das hinter der Öffnung 4 angeordnete Gegenstück 2 mit Anzugselement 3, wobei das Gegenstück 2 und das Gewindeelement 9 des Anzugselements 3 komplett hinter der dünnwandigen Platte 5 angeordnet, jedoch noch nicht ausgerichtet sind. Das Führungselement 10 des Anzugselements 3 befindet sich auf der Vorderseite 16 der dünnwandigen Platte 5 und das Gegenstück 2 kann auf eine einfache Weise hinter der dünnwandigen Platte 5 ausgerichtet, an die dünnwandigen Platte 5 angezogen und haftend festgelegt werden.

Fig. 7 zeigt das hinter der Öffnung 4 angeordnete und ausgerichtete Gegenstück 2 mit Anzugselement 3. Das Gegenstück 2 ist auf der Rückseite 15 der dünnwandigen Platte 5 ausgerichtet und haftend angeordnet, so dass das Anzugselement 3 von dem Gegenstück 2 gelöst und das Befestigungselement 18 an dem Gegenstück 2 angeordnet werden kann.

Durch die Ausgestaltung des Gegenstücks 2 mit Anzugselement 3 kann das Gegenstück 2 mit dem Anzugselement 3 auf eine einfache Weise von der Vorderseite 16 der dünnwandigen Platte 5 auf die Rückseite 15 der dünnwandigen Platte 5 geführt und dort ausgerichtet werden. Anschließend kann das Anzugselement 3 von dem Gegenstück 2 gelöst werden und das Befestigungselement 18 an dem Gegenstück 2 festgelegt werden.

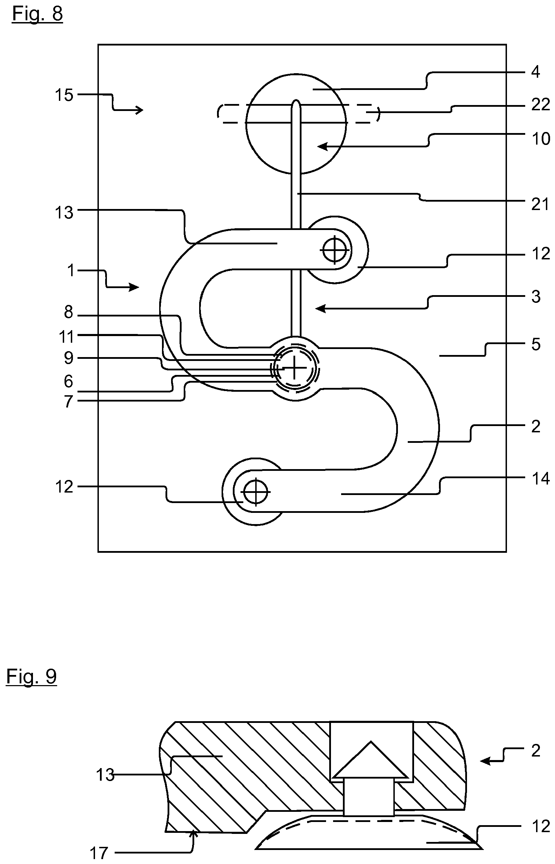

Fig. 8 zeigt das Gegenstück 2 mit dem alternativ ausgestalteten Anzugselement 3, wobei das Führungselement 10 in Form eines Fadens 21 mit einem Sicherungselement 22 ausgestaltet ist. Das Sicherungselement 22 ist ein an dem Faden mittig festgelegter Stab und weist eine Breite auf, die größer als der Durchmesser der Öffnung 4 ist. Auf diese Weise kann erfindungsgemäß verhindert werden, dass das Gegenstück 2 durch die Öffnung 4 auf die Rückseite 15 der Platte 5 durchgeführt und möglicherweise unzugänglich wird. Fig. 9 zeigt das Gegenstück 2 mit einem Haftelement 12 in Form eines Saugnapfs. Das Haftelement 12 ist in einer Ausnehmung derart angeordnet, dass ein Kontakt zwischen dem Haftelement 12 und der Rückseite 15 der Platte 5 gewährleistet und ein Anlegen der Auflagefläche 17 an die Rückseite 15 der dünnwandigen Platte 5 nicht verhindert wird.

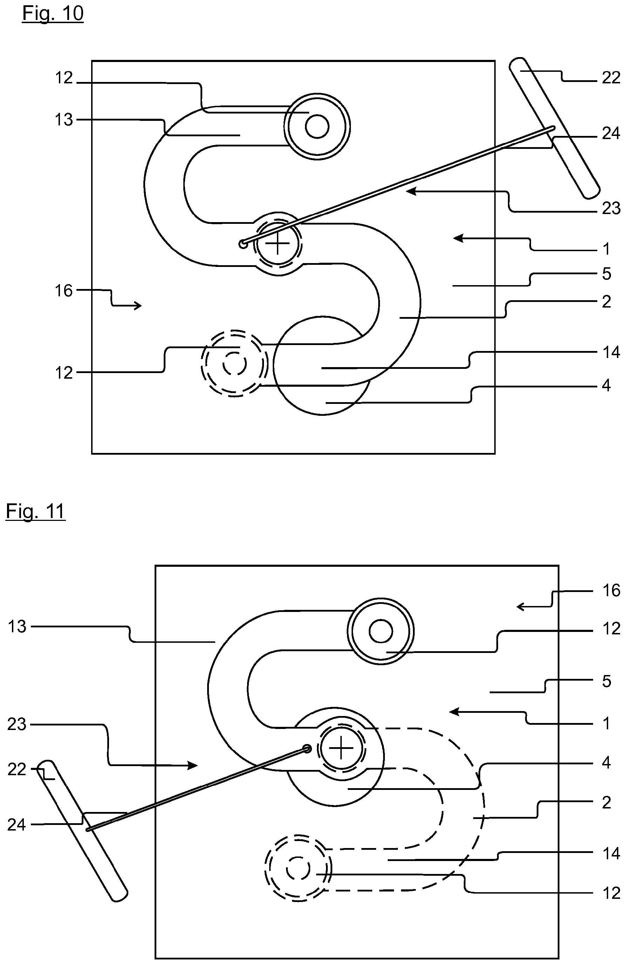

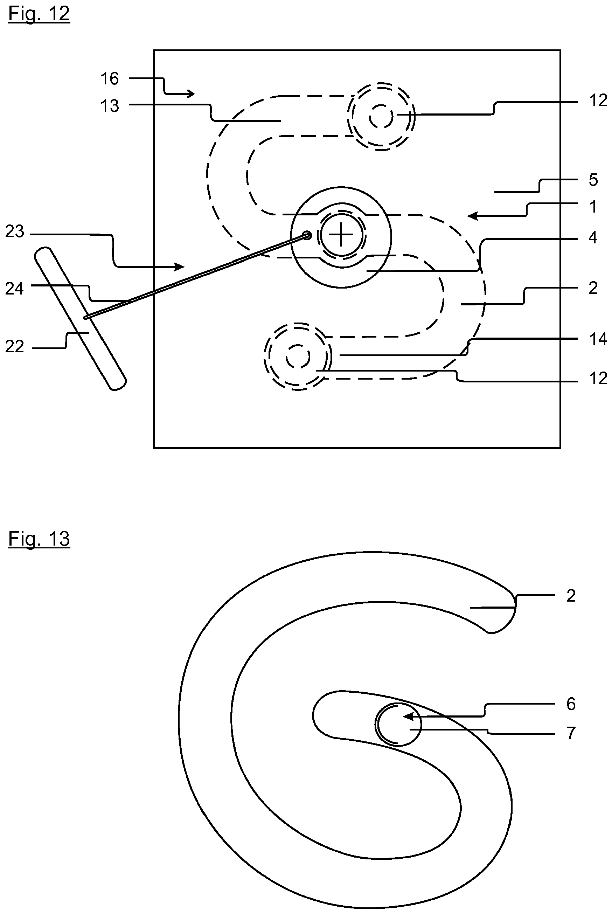

Fig. 10 bis Fig. 12 zeigen eine Durchführung des Gegenstücks 2 durch die Öffnung 4 an der dünnwandigen Platte 5. In Fig. 10 und in Fig. 11 ist das Gegenstück abschnittsweise durch die Öffnung 4 an die Rückseite 15 der Platte 5 durchgeführt und in Fig. 12 ist das Gegenstück 2 auf der Rückseite 15 der Platte 5 angeordnet und ausgerichtet. Das Gegenstück weist eine Sicherungseinrichtung 23 auf, die das Sicherungselement 22 und ein Verbindungselement 24 aufweist. Die Sicherungseinrichtung 23 verhindert, dass das Gegenstück 2 durch die Öffnung 4 auf die Rückseite 15 der Platte 5 durchgeführt und möglicherweise unzugänglich wird.

Fig. 13 zeigt eine Draufsicht des bei dieser exemplarisch gezeigten Variante näherungsweise spiralförmig ausgestalteten Gegenstücks 2, das die Aufnahmeeinrichtung 6 in Form einer Bohrung 7 aufweist. Das spiralförmig ausgestaltete Gegenstück 2 kann in insbesondere engen Räumen hinter der dünnwandigen Platte 5 vorteilhaft verwendet werden. Dabei kann das Gegenstück 2 durch die Öffnung 4 der Platte 5 durch kreisende Bewegung durchgeführt werden und an der Rückseite 15 der dünnwandigen Platte 5 angeordnet und festgelegt werden. Die gesamte Länge des Gegenstücks 2 kann beispielsweise zwischen 20 cm und 25 cm, die Breite zwischen 0,5 cm und 1,5 cm und die Dicke des Gegenstücks beispielsweise zwischen 0,5 cm und 1 cm liegen, um eine Führung des Gegenstücks durch die Öffnung zusätzlich zu erleichtern. Bei der exemplarisch gezeigten Ausgestaltung des Gegenstücks entspricht die Formgebung des Gegenstücks näherungsweise einem G. Es ist ebenfalls denkbar, dass das Gegenstück weniger gekrümmt und damit etwa C-förmig ist, oder aber stärker gekrümmt ist und deutlich mehr als eine spiralförmige Windung aufweist.

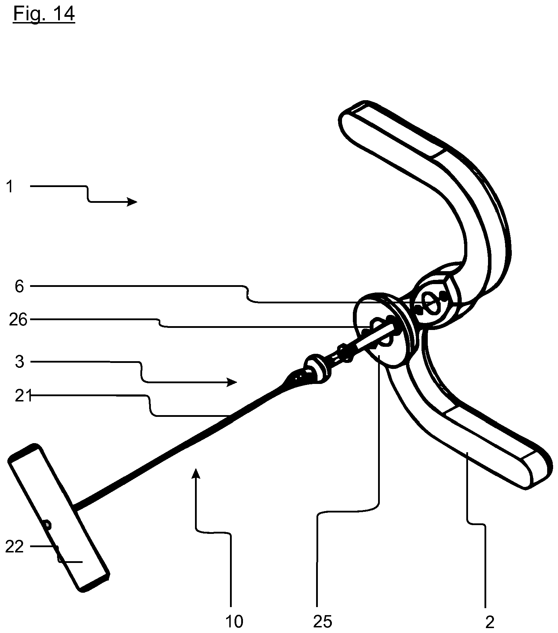

Fig. 14 zeigt eine Ansicht der erfindungsgemäßen Vorrichtung 1 mit einem Montagehilfsteil 25. Die Vorrichtung weist das Anzugselement 3 mit dem Sicherungselement 22 und mit dem Führungselement 10 in Form eines Fadens 21. Das Montagehilfsteil 25 weist eine Montageöffnung 26 auf und ist auf dem Anzugselement 3 bereits vor der Montage des Befestigungselements 18 angeordnet. Durch das Anzugselement 3 kann das durch die Öffnung 4 der dünnwandigen Platte 5 durchgeführte Gegenstück 2 an die Rückseite 15 angeordnet und ausgerichtet werden und durch das Montagehilfsteil 25 klemmend an der Platte 5 festgelegt werden. Anschließend kann das Befestigungselement 18 an dem Gegenstück 2 festgelegt werden, wobei die Aufnahmeeinrichtung 6 des Gegenstücks 2 durch die Montageöffnung 26 des Montagehilfsteils 25 für die Montage des Befestigungselements 18 zugänglich bleibt.

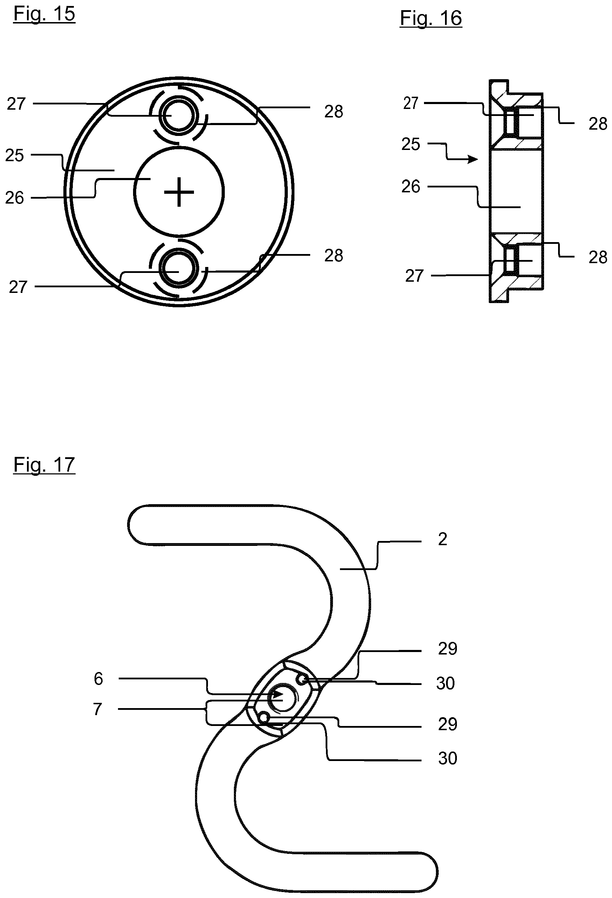

Fig. 15 zeigt eine Draufsicht des Montagehilfsteils 25, wobei das Montagehilfsteil 25 die Montageöffnung 26 und zwei Montagebohrungen 27 aufweist. In Fig. 16 ist eine Schnittansicht des Montagehilfsteils 25 gezeigt, wobei die Montagebohrungen 27 jeweils ein Gewinde 28 aufweisen, so dass das Montagehilfsteil 25 beispielsweise durch Schrauben an dem Gegenstück 2 festgelegt werden kann.
Fig. 17 zeigt eine Draufsicht des Gegenstücks 2, wobei das Gegenstück 2 im Bereich der Aufnahmeeinrichtung 6 zwei weitere Montagebohrungen 29 mit einem Gewinde 30 aufweist. Durch die Montagebohrungen 27 und 28 mit dem Gewinde 28 und 30 kann das Montagehilfsteil 25 an dem Gegenstück 2 beispielsweise durch Schrauben festgelegt werden.

## Patentansprüche

1. Vorrichtung (1) zur Anordnung eines Gegenstücks (2) mit Hilfe eines Anzugselements (3) hinter einer dünnwandigen Platte (5), wobei die Vorrichtung (1) das Gegenstück (2) und das Anzugselement (3) umfasst, wobei das Gegenstück (2) stabförmig, starr und einstückig ausgestaltet ist und einen abschnittsweise unterschiedlich ausgerichteten Verlauf aufweist und wobei das Gegenstück (2) eine zu Enden (13, 14) des Gegenstücks (2) beabstandet angeordnete Aufnahmeeinrichtung (6) zur Festlegung eines Befestigungselements (18) aufweist, so dass das Gegenstück (2) durch eine Öffnung (4) der Platte (5) von einer Vorderseite (16) auf eine Rückseite (17) der Platte (5) geführt werden kann, mit dem Anzugselement (3) durch die Öffnung (4) an die Rückseite (15) der Platte (5) zeitweilig angezogen und festgelegt werden kann, und anschließend das Befestigungselement (18) mit dem Gegenstück (2) verbunden und das Gegenstück (2) mit dem Befestigungselement (18) dauerhaft an die Rückseite (15) der Platte (5) angedrückt und festgelegt werden kann, um das Befestigungselement (18) zusammen mit dem Gegenstück (2) an der Platte (5) klemmend festzulegen, **dadurch gekennzeichnet, dass** die Vorrichtung (1) ein an dem Gegenstück (2) festlegbares Montagehilfsteil (25) aufweist, das an die Vorderseite (16) der Platte (5) angelegt und mit dem Gegenstück (2) verbunden werden kann, um das Gegenstück (2) an der Platte (5) während der Montage klemmend festzulegen.

2. Vorrichtung (1) nach Anspruch 1, **dadurch gekennzeichnet, dass** das Montagehilfsteil (25) eine Montageöffnung (26) aufweist, um eine Montage des Befestigungselements (18) an dem Gegenstück (2) zu ermöglichen.

3. Vorrichtung (1) nach Anspruch 2, **dadurch gekennzeichnet, dass** das Montagehilfsteil (25) zwei Montagebohrungen (27) aufweist, wobei die Montagebohrungen (27) jeweils ein Gewinde (28) aufweisen, so dass das Montagehilfsteil (25) beispielsweise durch Schrauben an dem Gegenstück (2) festgelegt werden kann.

4. Vorrichtung (1) nach einem der vorausgehenden Ansprüche, **dadurch gekennzeichnet, dass** ein das Gegenstück (2) einhüllendes Rechteck ein Seitenverhältnis 1:2, bevorzugt 1:1,5 aufweist.

5. Vorrichtung (1) nach Anspruch 4, **dadurch gekennzeichnet, dass** das Gegenstück (2) eine Auflagefläche (17) aufweist, die flächig an die Rückseite (15) der dünnwandigen Platte (5) anlegbar ist.

6. Vorrichtung (1) nach Anspruch 5, **dadurch gekennzeichnet, dass** die Auflagefläche (17) ein Haftelement (12) aufweist, so dass das Gegenstück (2) an der Platte (5) haftend festlegbar ist.

7. Vorrichtung (1) nach Anspruch 6, **dadurch gekennzeichnet, dass** die Auflagefläche (17) eine Ausnehmung aufweist und das Haftelement (12) in der Ausnehmung festgelegt ist, so dass die Auflagefläche (17) flächig an die Rückseite (15) der dünnwandigen Platte (5) anlegbar ist.

8. Vorrichtung (1) nach einem der vorangehenden Ansprüche, **dadurch gekennzeichnet, dass** die Aufnahmeeinrichtung (6) eine Bohrung (7) aufweist.

9. Vorrichtung (1) nach Anspruch 8, **dadurch gekennzeichnet, dass** die Bohrung (7) einen Durchmesser zwischen 0,3 cm und 1,5 cm, bevorzugt zwischen 0,5 cm und 1 cm aufweist.

10. Vorrichtung (1) nach Anspruch 8 oder Anspruch 9, **dadurch gekennzeichnet, dass** die Bohrung (7) einen kleineren Durchmesser als die Öffnung (4) aufweist, so dass die seitlichen Abstandsdifferenzen bei einer Festlegung des Gegenstücks (2) an der Öffnung (4) ausgeglichen werden können.

11. Vorrichtung (1) nach einem der vorangehenden Ansprüche, **dadurch gekennzeichnet, dass** die Bohrung (7) ein Gewinde (8) aufweist.

12. Vorrichtung (1) nach Anspruch 11, **dadurch gekennzeichnet, dass** das Anzugselement (3) ein Gewindeelement (9) mit einem Gewinde (11) aufweist, das mit dem Gewinde (8) der Bohrung (7) in Eingriff bringbar ist.

13. Vorrichtung (1) nach einem der vorangehenden Ansprüche, **dadurch gekennzeichnet, dass** das Anzugselement (3) ein flexibles Führungselement (10) aufweist.

14. Vorrichtung (1) nach einem der vorangehenden Ansprüche, **dadurch gekennzeichnet, dass** die Vorrichtung (1) eine Sicherungsvorrichtung (23) mit einem Sicherungselement (22) und mit einem Verbindungselement (24) aufweist, wobei das Sicherungselement (22) mit Hilfe des Verbindungselements (24) an dem Gegenstück (2) festgelegt ist.

15. Vorrichtung (1) nach einem der vorangehenden Ansprüche, **dadurch gekennzeichnet, dass** das Gegenstück (2) einen Z-, S-, W-, C-, G-, L-, M- oder spiralförmigen Verlauf aufweist, so dass das Gegenstück (2) durch die Öffnung (4) von der Vorderseite (16) auf die Rückseite (17) der Platte (5) geführt werden kann.

## Claims

1. A device (1) for arranging a counter-piece (2) behind a thin-walled panel (5) using a tightening element (3), wherein the device (1) comprises the counter-piece (2) and the tightening element (3), wherein the counter-piece (2) is formed rod-shaped, rigid and in one piece and has a profile that is in sections oriented differently, and wherein the counter-piece (2) comprises a reception device (6), arranged at a distance from ends (13, 14) of the counter-piece (2), for securing a fastening element (18) so that the counter-piece (2) can be guided through an opening (4) of the panel (5) from a front side (16) to a rear side (17) of the panel (5), be temporarily tightened and secured to the rear side (15) of the panel through the opening (4) with the tightening element (3), and subsequently the fastening element (18) can be connected to the counter-piece (2) and the counter-piece (2) can be permanently pressed against and secured to the rear side (15) of the panel (5) together with the fastening element (18) to secure the fastening element (1) to the panel (5) together with the counter-piece (2) in a clamping manner, **characterized in that** the device (1) comprises an auxiliary mounting part (25) which can be secured to the counter-piece (2) and which can be placed on the front side (16) of the panel (5) and be connected to the counter-piece (2) in order to secure the counter-piece (2) to the panel (5) in a clamping manner during the mounting process.

2. The device (1) according to claim 1, **characterized in that** the auxiliary mounting part (25) comprises a mounting opening (26) in order to enable a mounting of the fastening element (18) on the counter-piece (2).

3. The device (1) according to claim 2, **characterized in that** the auxiliary mounting part (25) comprises two mounting bores (27), wherein the mounting bores (27) each comprise a thread (28) so that the auxiliary mounting part (25) can be secured to the counter-piece (2) e.g. by screwing.

4. The device (1) according to one of the preceding claims, **characterized in that** a rectangle inclosing the counter-piece (2) has an aspect ratio of 1:2, preferably 1:1.5.

5. The device (1) according to claim 4, **characterized in that** the counter-piece (2) has a contact surface (17) which can be placed in a planar manner on the rear side (15) of the thin-walled panel (5).

6. The device (1) according to claim 5, **characterized in that** the contact surface (17) comprises an adhesive element (12) so that the counter-piece can be secured to the panel (5) in an adhesive manner.

7. The device (1) according to claim 6, **characterized in that** the contact surface (17) comprises a recess and the adhesive element (12) is secured in the recess so that the contact surface (17) can be placed on the rear side (15) of the thin-walled panel (5) in a planar manner.

8. The device (1) according to one of the preceding claims, **characterized in that** the reception device (6) comprises a drill hole (7).

9. The device (1) according to claim 8, **characterized in that** the drill hole (7) has a diameter of between 0.3 cm and 1.5 cm, preferably between 0.5 cm and 1 cm.

10. The device (1) according to claim 8 or claim 9, **characterized in that** the drill hole (7) has a smaller diameter than the opening (4), so that the lateral distance differences can be compensated when the counter-piece (2) is secured to the opening.

11. The device (1) according to one of the preceding claims, **characterized in that** the drill hole (7) comprises a thread (8).

12. The device (1) according to claim 11, **characterized in that** the tightening element (3) comprises a thread element (9) having a thread (11), which can be engaged with the thread (8) of the drill hole (7).

13. The device (1) according to one of the preceding claims, **characterized in that** the tightening element (3) comprises a flexible guide element (10).

14. The device (1) according to one of the preceding claims, **characterized in that** the device (1) comprises a securing device (23) having a securing element (22) and a connection element (24), wherein the securing element (22) is secured to the counter-piece (2) using the connection element (24).

15. The device (1) according to one of the preceding claims, **characterized in that** the counter-piece (2) has a Z-, S-, W-, C-, G-, L-, M- or spiral profile, so that the counter-piece (2) can be guided in the rear side (17) of the panel (5).

## Revendications

1. Dispositif (1) destiné à agencer une contre-pièce (2) au moyen d'un élément de serrage (3) derrière une plaque (5) de faible épaisseur, le dispositif (1) comprenant la contre-pièce (2) et l'élément de serrage (3), la contre-pièce (2) étant configurée en forme de barre, de façon rigide et monobloc et présentant une course orientée différemment en segments, et la contre-pièce (2) présentant un dispositif de réception (6) agencé de manière espacée par rapport aux extrémités (13, 14) de la contre-pièce (2) pour attacher un élément de fixation (18), de façon à pouvoir guider la contre-pièce (2) à travers une ouverture (4) de la plaque (5) d'une face avant (16) vers une face arrière (17) de la plaque (5), à pouvoir la fixer et la serrer temporairement à l'aide de l'élément de serrage (3) par l'ouverture (4) située sur la phase arrière (15) de la plaque (5), puis à pouvoir ensuite raccorder l'élément de fixation (18) à la contre-pièce (2) et à pouvoir serrer et presser de manière permanente la contre-pièce (2) et l'élément de fixation (18) sur la face arrière (15) de la plaque (5) pour fixer par serrage l'élément de fixation (18) à la contre-pièce (2) sur la plaque (5), **caractérisé en ce que** le dispositif (1) présente une pièce de montage auxiliaire (25) pouvant être fixée à la contre-pièce (2), laquelle pièce auxiliaire peut être reposé contre la face avant (16) de la plaque (5) et raccordée à la contre-pièce (2) pour fixer la contre-pièce (2) à la plaque (5) de façon serrée lors du montage.

2. Dispositif (1) selon la revendication 1, **caractérisé en ce que** la pièce de montage auxiliaire (25) présente une ouverture de montage (26), pour permettre un montage de l'élément de fixation (18) à la contre-pièce (2).

3. Dispositif (1) selon la revendication 2, **caractérisé en ce que** la pièce de montage auxiliaire (25) présente deux alésages de montage (27), les alésages de montage (27) présentant à chaque fois un filetage (28), de façon à permettre fixer la pièce de montage auxiliaire (25) par exemple à l'aide d'une vis au niveau de la contre-pièce (2).

4. Dispositif (1) selon l'une quelconque des revendications précédentes, **caractérisé en ce qu'**un rectangle enveloppant la contre-pièce (2) présente un rapport côté/côté de 1:2, de préférence de 1:1,5.

5. Dispositif (1) selon la revendication 4, **caractérisé en ce que** la contre-pièce (2) présente une surface d'appui (17), qui peut être attachée sur toute la surface de la face arrière (15) de la plaque (5) de faible épaisseur.

6. Dispositif (1) selon la revendication 5, **caractérisé en ce que** la surface d'appui (17) présente un élément adhésif (12), de façon à permettre à la contre-pièce (2) d'être attachée de manière adhésive à la plaque (5).

7. Dispositif (1) selon la revendication 6, **caractérisé en ce que** la surface de d'appui (17) présente un évidement et l'élément adhésif (12) est fixé dans l'évidement, de telle façon que la surface d'appui (17) puisse être reposée sur toute la surface de la face arrière (15) de la plaque (5) de faible épaisseur.

8. Dispositif (1) selon l'une quelconque des revendications précédentes, **caractérisé en ce que** le dispositif de réception (6) présente un alésage (7).

9. Dispositif (1) selon la revendication 8, **caractérisé en ce que** l'alésage (7) présente un diamètre compris entre 0,3 cm et 1,5 cm, de préférence entre 0,5 cm et 1 cm.

10. Dispositif (1) selon la revendication 8 ou la revendication 9, **caractérisé en ce que** l'alésage (7) présente un plus petit diamètre que l'ouverture (4), de façon à permettre une compensation des différences de distance latérale lors d'une fixation de la contre-pièce (2) à l'ouverture (4).

11. Dispositif (1) selon l'une quelconque des revendications précédentes, **caractérisé en ce que** l'alésage (7) présente un filetage (8).

12. Dispositif (1) selon la revendication 11, **caractérisé en ce que** l'élément de serrage (3) présente un élément fileté (9) avec un filetage (11) lequel élément pouvant venir s'engager dans le filetage (8) de l'alésage (7).

13. Dispositif (1) selon l'une quelconque des revendications précédentes, **caractérisé en ce que** l'élément de serrage (3) présente un élément de guidage flexible (10).

14. Dispositif (1) selon l'une quelconque des revendications précédentes, **caractérisé en ce que** le dispositif (1) présente un dispositif de sécurité (23) pourvu d'un élément de protection (22) et pourvu d'un élément de raccordement (24), l'élément de sécurité (22) est fixé au moyen de l'élément de raccordement (24) à la contre-pièce (2).

15. Dispositif (1) selon l'une quelconque des revendications précédentes, **caractérisé en ce que** la contre-pièce (2) présente une course en forme de Z, S, W, C, G, L, M ou en spirale, de façon à ce que la contre-pièce (2) peut être guidée à travers l'ouverture (4) de la face avant (16) vers la face arrière (17) de la plaque (5).
